# EUROPEAN PATENT SPECIFICATION

(11) **EP 2 526 779 B1**
(45) Date of publication and mention of the grant of the patent: **29.06.2016**
(21) Application number: 12075091.4
(22) Date of filing: 01.04.2010
(51) Int. Cl.: A23G 1/18, A23G 1/00

(54) **APPARATUS FOR CONTINUOUS TEMPERING OF CHOCOLATE MASS**
VORRICHTING ZUM KONTINUIERLICHEN TEMPERIEREN VON SCHOKOLADENMASSE
APPAREIL POUR LE CONDITIONNEMENT THERMIQUE CONTINU DE MASSES DE CHOCOLAT

(43) Date of publication of application: 28.11.2012
(62) Divisional of application: 10075151.0
(73) Proprietor: Aasted ApS, 3520 Farum (DK)
(72) Inventor: Holmud, Dennis, 2860 Søborg (DK)
(74) Representative: Heiden, Finn

(56) References cited:
- EP-A1- 0 872 187
- EP-A1- 0 893 066
- EP-A1- 0 947 140
- EP-A1- 1 425 975
- EP-A1- 1 566 104
- EP-A1- 1 616 487
- EP-A2- 1 050 214
- EP-A2- 1 249 174
- WO-A1-01/06863
- WO-A1-92/00015
- DE-A1- 2 602 877
- DE-A1- 10 329 177
- FR-A- 1 163 921

## Description

The present invention concerns an apparatus for continuous tempering of fat-containing, crystallisable chocolate mass, which has been heated to a constant temperature between 40°C and 50°C in a tank, so that it is liquid, pumpable and free from crystals, comprising a tube connecting the tank with a pump, a cooler or heat exchanger connected with the pump at the inlet and with branching means at the outlet, which branching means is adapted for dividing the mass into a first stream of mass and a second stream of mass, so that crystals are created in the first stream of mass, and so that the second stream of mass is still being free from crystals, and mixing means adapted for mixing the first stream of mass and the second stream of mass together into one final crystallised stream of mass.

Generally, the chocolate mass, that is continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.
Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines.

EP 1249174 A1 discloses an apparatus comprising a traditional tempering column having a cooling stage and a mixing stage. The column is, however, configured without an intermediate crystallization stage. A tube part extends either from the end of the cooling stage or from a mass storage tank to above the funnel of an open mixer, fig. 2 or 3. The open mixer is connected with the mixing stage of the column. The creation of crystals (Impfkristalle) is done outside the column. The crystals are then pre-made in powder-form at another apparatus and are added to the funnel. A stream of non-crystallised mass in the tube is then mixed with the added pre-crystallised powder in the open mixer.
The "crystallised" stream is mixed with the remaining mass in the mixing stage of the column.

DE 10329177 A1 discloses, that a separate stream of mass is lead via one or more passages through the fixed water chambers inside a tempering apparatus, ie. (0014) and fig. 2, 3. Both the separate stream of mass and the major stream are subjected to the same temperature conditions dictated by the water chamber. Both streams of mass are then either cooled or heated. Consequently, both streams are crystallized simultaneously.

FR 1163921 A discloses two configurations of apparatus for batch production, by which a stream of mass is extracted from a batch of mass with crystals and is being re-circulated to the same batch of mass again. Due to the nature of the re-circulation the batch always has a content of crystals. The extracted stream of mass then also has a content of crystals when re-circulated.

DE 2602877A1 discloses an apparatus for crystallization of a batch of chocolate. A stream of mass is extracted from the batch of mass already being enriched with crystals and being re-circulated to the same batch of mass again.

WO 01/06863A1 discloses a method by which a stream of crystallized mass is being extracted from a main stream of mass, is re-circulated and again mixed into the main stream for upgrading it with crystals.

EP 1616487 A1 (Sollich) discloses a tempering apparatus by which already tempered mass is recirculated to the mixing or conditioning stage or to the crystallisation stage for upgrading the concentration of crystals in the mass. However the crystal content may be difficult to control exactly to a desired level.

EP 1180941 A1 discloses a method and an apparatus by which a seed suspension having a content of beta VI crystals is prepared by use of a high shear crystalliser, with or without the addition of crystal powder. The seed suspension is subsequently mixed in a content of 0,01% - 0,2% with a main stream of a crystal free mass such as for example a filling mass with a content of oils derived from nuts.
The challenge of this prior method and apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter-fat.

According to the invention, the apparatus is characterised in, that the branching means is a tube branch, of which a first tube is connected with a tempering device for cooling and crystallisation of the first stream of mass, that a second tube of the tube branch being adapted for leading the second stream of mass directly to a static mixer, and that a tube connects the tempering machine with the mixer.

The apparatus configuration makes it possible to crystallise only a smaller part of the total mass. The necessary cooling energy is then lowered as well as the energy requirements for electric gear motor and chocolate pumps. The cooling surfaces of the tempering apparatus is lesser than of that by the prior art machines for producing the same total amount of crystallised mass. The total energy requirements for the complete apparatus is then also lowered in comparison with the prior art machines for producing the same amount of tempered mass. The inventive apparatus can then be produced smaller in size. A very high desirable quality with diminishing content of in-stable crystals is achievable without using any "seed" technique by which expensive cocoa butter has to be crystallised separately and added to the particular mass.

It is especially advantageous when the apparatus is adapted to divide between 5% to 40% of the total mass into the first stream of mass and the rest into the second stream of mass. Then, the appropriate size of cooling surfaces and cooling capacity in the crystallisation stage is much lesser than when 100% of mass has to be crystallised. The apparatus may then be made especially small and the energy consumption is lowered severely for the apparatus, i.e. up to 70%.

Tests has shown, that when the amount of the first stream of mass is between 10% and 30% of the amount of the final stream of mass, the highest possible capacity of mass is achieved for a fixed configuration of an apparatus. The energy savings are also among the greatest. The totally consumed energy for apparatus is measured to between 7,7 W/Kg/hour and 9,2 W/Kg/hour tempered dark chocolate mass or milk chocolate mass. In comparison herewith the totally consumed energy for prior art apparatuses was measured to 20-25 W/Kg/hour at the same conditions. The maximum tempered amount was between 1400 kg and 1800 kg per hour.

A great advantage is also, that all the equipment of the apparatus is well-known components. For example may the tempering unit, the tanks, and the mixers be of known types commercially available at the market.

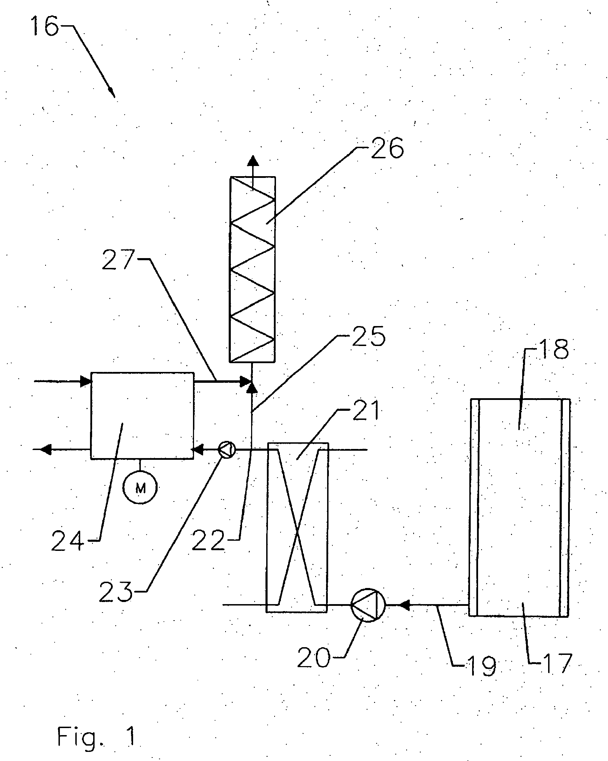

The invention is further described by referring to the drawing, in which
figure 1 schematically discloses an apparatus configuration according to the invention.

The apparatus 16 of figure 1 is according to the invention. A tank 17 keeps the mass 18 at a constant temperature between 40°C and 50°C. A tube 19 connects the tank 17 with a pump 20. A cooler or heat exchanger 21 is connected with the pump 20 at the inlet and with a branch 22 at the outlet. The branch 22 is connected with a pump 23 for delivering the first stream of mass to a tempering apparatus or cooler 24, and is further connected with a tube 25 for delivering the second stream directly to a static mixer 26. A tube 27 connects the tempering machine 24 with the mixer 26 for delivering tempered mass to the mixer.

The total mass is cooled in the cooler close to a temperature where crystals can be created, however the mass is still crystal-free. Via the pump 23 the first stream of mass is pumped into the tempering column 24 in an amount of typically between 10% and 40%. The first stream is tempered in the apparatus 24, so that a content of between 0,5% and 3% of crystals is created. The normal tempering settings and procedures are followed as if the tempering machine was standing alone as by the prior art. Thereby, desirable tempering curves are obtained. In the mixer the two streams of mass are mixed thoroughly together into a finally crystallized mass. The energy savings are typically a few percent better than when approximately 35% of the total energy requirement is saved in comparison with the energy required by a traditional tempering machine. Approximately 1000 kg/hour of well-tempered dark chocolate was delivered continuously by the mixer. Or than when astonishingly approximately 55% of the total energy requirement is saved in comparison with the energy required by a traditional tempering machine. Approximately 1400 kg/hour of well-tempered milk chocolate was delivered continuously by the mixer.

## Claims

1. Apparatus (1) for continuous tempering of a fat-containing, crystallisable chocolate mass, which has been heated to a constant temperature between 40°C and 50°C in a tank (17), so that it is liquid, pumpable and free from crystals, comprising a tube (19) connecting the tank (17) with a pump (20), a cooler or heat exchanger (21) connected with the pump (20) at the inlet and with branching means (22) at the outlet, which branching means (22) is adapted for dividing the mass into a first stream of mass and a second stream of mass, so that crystals are created in the first stream of mass, and so that the second stream of mass is still being free from crystals, and mixing means (26) adapted for mixing the first stream of mass and the second stream of mass together into one final crystallised stream of mass,
**characterised in,**
**that** the branching means is a tube branch (22), of which a first tube (23) is connected with a tempering device (24) for cooling and crystallisation of the first stream of mass,
**that** a second tube (25) of the tube branch (22) being adapted for leading the second stream of mass directly to a static mixer (26),
and **that** a tube (27) connects the tempering machine (24) with the mixer (26).

## Patentansprüche

1. Vorrichtung (1) zum kontinuierlichen Temperieren einer fetthaltigen kristallisierbaren Schokolademasse, die in einem Tank (17) auf eine konstante Temperatur zwischen 40 °C und 50 °C erwärmt worden ist, so dass sie flüssig, pumpbar und frei von Kristallen ist, umfassend ein Rohr (19), das den Tank (17) mit einer Pumpe (20) verbindet, einen Kühler oder Wärmetauscher (21), der an dem Einlass mit der Pumpe (20) und an dem Auslass mit einer Verzweigungseinrichtung (22) verbunden ist, wobei die Verzweigungseinrichtung (22) dafür ausgelegt ist, die Masse in einen ersten Massestrom und einen zweiten Massestrom aufzuteilen, so dass in dem ersten Massestrom Kristalle erzeugt werden und so dass der zweite Massestrom noch frei von Kristallen ist, und eine Mischeinrichtung (26), die dafür ausgelegt ist, den ersten Massestrom und den zweiten Massestrom zu einem fertigen, kristallisierten Massestrom zu mischen,
**dadurch gekennzeichnet,**
**dass** die Verzweigungseinrichtung ein Rohrzweig (22) ist, von dem ein erstes Rohr (23) mit einer Temperiervorrichtung (24) zum Abkühlen und Kristallisieren des ersten Massestroms verbunden ist,
**dass** ein zweites Rohr (25) des Rohrzweigs (22) dafür ausgelegt ist, den zweiten Massestrom direkt zu einem statischen Mischer (26) zu führen,
und **dass** ein Rohr (27) die Temperiermaschine (24) mit dem Mischer (26) verbindet.

## Revendications

1. Appareil (1) pour le conditionnement continu d'une masse de chocolat cristallisable contenant des matières grasses, qui a été chauffée à une température constante entre 40° C et 50° C dans un réservoir (17) de manière à ce qu'elle soit liquide, qu'elle puisse être pompée et qu'elle soit exempte de cristaux, comprenant un tube (19) connectant le réservoir (17) à une pompe (20), un refroidisseur ou un échangeur de chaleur (21) connecté à la pompe (20) au niveau de l'entrée et avec des moyens de ramification (22) au niveau de la sortie, lesquels moyens de ramification (22) sont prévus pour diviser la masse en un premier flux de masse et un deuxième flux de masse, de telle sorte que des cristaux soient créés dans le premier flux de masse, et de telle sorte que le deuxième flux de masse soit toujours exempt de cristaux, et des moyens de mélange (26) prévus pour mélanger le premier flux de masse et le deuxième flux de masse conjointement dans un flux de masse cristallisé final,
**caractérisé**
**en ce que** le moyen de ramification est une ramification de tube (22), dont un premier tube (23) est connecté à un dispositif de conditionnement (24) pour refroidir et cristalliser le premier flux de masse,
**en ce qu'**un deuxième tube (25) de la ramification de tube (22) est prévu pour conduire le deuxième flux de masse directement jusqu'à un mélangeur statique (26),
et **en ce qu'**un tube (27) relie la machine de conditionnement (24) au mélangeur (26).
